# EUROPEAN PATENT APPLICATION

(11) **EP 4 819 229 A1**
(43) Date of publication of application: **07.10.2026**
(21) Application number: 24899271.1
(22) Date of filing: 19.07.2024
(51) Int. Cl.: H01M 4/36, H01M 4/587, H01M 4/133, H01M 10/05, C01B 32/23

(54) **GRAPHITE NEGATIVE ELECTRODE ACTIVE MATERIAL AND PREPARATION METHOD THEREFOR, NEGATIVE ELECTRODE SHEET, SECONDARY BATTERY, AND ELECTRIC DEVICE**

(30) Priority: 07.12.2023 CN 202311679097
(71) Applicant: Contemporary Amperex Technology Co., Limited, Ningde, Fujian 352100 (CN)
(72) Inventor: PENG, Bin, Ningde, Fujian 352100 (CN); MA, Jianjun, Ningde, Fujian 352100 (CN); CHEN, Meiwan, Ningde, Fujian 352100 (CN); HE, Libing, Ningde, Fujian 352100 (CN)
(74) Representative: Ziebig Hengelhaupt Intellectual Property Attorneys Patentanwaltskanzlei PartGmbB
(86) International application number: PCT/CN2024/106545
(87) International publication number: WO 2025/118620

(57) **Abstract**

A graphite negative electrode active material and a preparation method therefor, a negative electrode sheet containing same, a secondary battery, and an electric device. A particle body of the graphite negative electrode active material comprises an internal area and a surface-layer area at least partially surrounding the internal area; the surface-layer area refers to an area formed by extending from the surface of the particle body of the graphite negative electrode active material to the interior of a particle by a distance of 30 nm; the mass percentage of crystalline carbon in the internal area is denoted as η1; the mass percentage of crystalline carbon in the surface-layer area is denoted as η2; and 10% ≤ η1 - η2 ≤ 35%. The graphite negative electrode active material can improve cycle performance of a battery.

## Description

### CROSS REFERENCE

The present application claims priority to Chinese Patent Application No. 202311679097.9 filed on December 7, 2023 and entitled "Graphite Negative Electrode Active Material and Preparation Method Therefor, Negative Electrode Sheet, Secondary Battery, and Electric Device", which is incorporated herein by reference in its entirety.

### TECHNICAL FIELD

The present disclosure belongs to the technical field of batteries, and in particular, to a graphite negative electrode active material and a preparation method therefor, a negative electrode sheet, a secondary battery, and an electric device.

### BACKGROUND

In recent years, secondary batteries have been widely applied in energy storage power systems such as hydraulic, thermal, wind, and solar power plants, as well as in various fields of power tools, electric bicycles, electric motorcycles, electric vehicles, military equipment, aerospace, and so on.

As requirements for endurance capability of electric devices continue to increase, more stringent requirements are placed on cycle life of secondary batteries. How to further increase the cycle life of secondary batteries is a technical problem that needs to be resolved urgently by those skilled in the art.

### SUMMARY

The present disclosure aims to provide a graphite negative electrode active material and a preparation method therefor, a negative electrode sheet, a secondary battery, and an electric device. The graphite negative electrode active material maintains good capacity while implementing improvement of battery cycle performance.

A first aspect of the present disclosure provides a graphite negative electrode active material. A particle body of the graphite negative electrode active material comprises an internal region and a surface-layer region at least partially surrounding the internal region. The surface-layer region refers to a region formed by extending from a surface of the particle body of the graphite negative electrode active material to an interior of a particle by a distance of 30 nm. The mass percentage of crystalline carbon in the internal region is denoted as η1, the mass percentage of crystalline carbon in the surface-layer region is denoted as η2, and 10% ≤ η1 - η2 ≤ 35%.

The surface-layer region of the graphite negative electrode active material has a lower mass percentage of crystalline carbon than the internal region, which means that carbon atoms in a surface layer of the graphite negative electrode active material are arranged in a less regular manner, making an interaction force between molecules in the surface-layer region is more complex, thereby resulting in higher strength and hardness of the surface-layer region than the internal region of the graphite negative electrode active material. In this way, the graphite negative electrode active material retains a relatively high degree of particle integrity during cold pressing, which reduces occurrence of side reactions and is beneficial to improvement of cycle stability of a battery. In addition, during a cycle, active ions are easily intercalated and deintercalated in the surface-layer region with low crystallinity of the graphite negative electrode active material, which can reduce an expansion rate of a secondary battery during a long cycle and further improve cycle stability of the battery. The internal region of the graphite negative electrode active material has a relatively high crystallinity, which enables the material to balance high capacity and high voltage density while reducing cycle expansion and improving cycle performance, so that an energy density of the battery does not be significantly attenuated.

In any implementation, 75% ≤ η1 ≤ 99%, optionally 80% ≤ η1 ≤ 95%.

The mass percentage of crystalline carbon in the internal region of the particle body of the graphite negative electrode active material being within the above range is beneficial to maintaining a high capacity of the graphite negative electrode active material, and the graphite negative electrode active material does not cause lattice interleaving due to excessive internal defects, so that the graphite negative electrode active material always maintains excellent electrochemical performance during a long-period cycle, thereby reducing a probability of battery performance "diving".

In any implementation, 55% ≤ η2 ≤ 75%, optionally 60% ≤ η2 ≤ 70%.

The mass percentage of crystalline carbon in the surface-layer region of the particle body of the graphite negative electrode active material being within the above range is beneficial to reducing physical rebound of the graphite negative electrode active material after cold pressing, and reducing an expansion rate of an electrode sheet during the cycle, thereby improving cycling stability of the secondary battery.

In any implementation, the graphite negative electrode active material has a degree of graphitization of 88% to 95%, optionally 90% to 95%.

It can be understood that the degree of graphitization is an overall measure of crystallinity of the graphite negative electrode active material; and by controlling the internal region and the surface-layer region of the graphite negative electrode active material to have different mass contents of crystalline carbon, the graphite negative electrode active material has a suitable degree of graphitization to balance capacity and cycle stability of the graphite negative electrode active material.

In any implementation, the graphite negative electrode active material has a volume distribution particle size Dv50 of 7.5 µm to 14.5 µm, optionally 8.5 µm to 12.5 µm.

The graphite negative electrode active material having a volume distribution particle size Dv50 within the above range can provide a certain ion channel, and does not cause too many side reactions due to a too small particle size and a too large specific surface area, which can balance both dynamic performance and cycle stability.

In any implementation, the graphite negative electrode active material has a specific surface area of 1.25 m²/g to 1.95 m²/g, optionally 1.35 m²/g to 1.75 m²/g.

The graphite negative electrode active material has a relatively low specific surface area, so that the graphite negative electrode active material can not only leverage the advantages of a relatively low mass content of crystalline carbon in the surface-layer region to reduce battery expansion, but also reduce a probability of side reactions through the relatively low specific surface area, thereby improving cycle stability of the battery.

In any implementation, the graphite negative electrode active material has a particle size distribution (Dv90 - Dv10)/Dv50 of 1.0 to 1.6, optionally 1.1 to 1.5.

Controlling the particle size distribution of the graphite negative electrode active material to be within the above range is beneficial to improving a degree of close packing of the graphite negative electrode active material and increasing a compacted density of a negative electrode film layer. In other words, a cold pressing pressure required for a negative electrode sheet to implement the same compacted density is smaller, thereby reducing a probability of cracking of the graphite negative electrode active material during cold pressing, and further improving integrity of the graphite negative electrode active material during processing; and a small stress inside particles of the graphite negative electrode active material is beneficial to maintaining a long-period pore structure of the electrode sheet during the cycle, and can maintain an original pore structure of the electrode sheet during the cycle, so that a lithium-ion intercalation path remains unobstructed, and re-filming of the graphite negative electrode active material is reduced during charging, thereby improving dynamic performance, increasing cycle life, and improving storage stability. Furthermore, the particle size distribution within the above range can further improve uniformity of lithium intercalation between particles of the graphite negative electrode active material, reduce generation of polarization, and avoid lithium precipitation caused by uneven current density, which is beneficial to implementing long-period cycle stability. In addition, the particle size distribution within the above range further helps to improve processing performance of the electrode sheet, and does not affect uniformity of slurry stirring due to too many small-sized particles in the graphite negative electrode active material, which is beneficial to improving uniformity and stability of quality of the electrode sheet and helping to implement long-period cycle stability.

In any implementation, the graphite negative electrode active material has a powder compacted density of 1.75 g/cm³ to 1.88 g/cm³, optionally 1.78 g/cm³ to 1.84 g/cm³, at a pressure of 49000 N.

For the graphite negative electrode active material having a powder compacted density within the above range, it is easy to maintain high particle integrity during cold pressing, which helps to the increase of cycle life of the secondary battery.

In any implementation, the graphite negative electrode active material has a tap density of 1.05 g/cm³ to 1.30 g/cm³.

In any implementation, the graphite negative electrode active material has a gram capacity of 345 mAh/g to 355 mAh/g, optionally 347 mAh/g to 353 mAh/g.

During charging and discharging, the graphite negative electrode active material having a gram capacity within the above range neither causes significant lattice expansion due to a too high degree of graphitization of the graphite negative electrode active material nor causes difficulty in compaction due to a too low degree of graphitization of the graphite negative electrode active material. In order to implement the same electrode sheet compacted density, a higher cold pressing pressure is required, thereby causing cracking during cold pressing, generating a new interface during the cycle to consume too much active lithium, and comprehensively improving the cycle life of the secondary battery.

In any implementation, the graphite negative electrode active material has a I_{D}/I_{G} of 0.05 to 0.10, wherein the I_{D}/I_{G} is the ratio of a D peak intensity to a G peak intensity obtained by a Raman spectrum, I_{D} represents the D peak intensity of the Raman spectrum at 1350 ± 100 cm⁻¹, and I_{G} represents the G peak intensity of the Raman spectrum at 1580 ± 100 cm⁻¹.

The I_{D}/I_{G} of the graphite negative electrode active material can be used to characterize a degree of surface disorder of the graphite negative electrode active material. Different from a graphite negative electrode active material subjected to a post-coating treatment on a surface of a graphite particle body, the graphite negative electrode active material provided by the embodiments of the present disclosure has a relatively low degree of surface disorder while having amorphous carbon on the surface. The amorphous carbon in the active material in which amorphous carbon is post-coated on the surface of the graphite particle body is generally derived from the coated organic resin, which generates the amorphous carbon under low-temperature carbonization, and thus the amorphous carbon in a coating layer has a high degree of surface disorder. Whereas, the surface-layer region and the internal region of the graphite negative electrode active material provided by the embodiments of the present disclosure are both derived from the same precursor and undergo the same heat treatment procedure, and thus the amorphous carbon of the graphite negative electrode active material is uniformly distributed in the surface-layer region of the graphite negative electrode active material, so that the surface-layer region of the graphite negative electrode active material has a low degree of surface disorder while having a low content of crystalline carbon. This enables the graphite negative electrode active material to leverage the advantages of amorphous carbon to improve dynamic performance of the battery and reduce a cycle expansion rate of the electrode sheet, and does not cause too many side reactions and a large decrease in capacity of the battery due to a too high degree of disorder of a surface layer of the graphite negative electrode active material, which can comprehensively improve cycle stability of the battery.

In any implementation, an interlayer spacing of the surface-layer region of the graphite negative electrode active material is denoted as d1, an interlayer spacing of the internal region of the graphite negative electrode active material is denoted as d2, and the graphite negative electrode active material satisfies d1 > d2, optionally 0.3365 nm ≤ d1 ≤ 0.3378 nm, and optionally 0.3358 nm ≤ d2 ≤ 0.3364 nm.

In any implementation, the graphite negative electrode active material comprises both primary particles and secondary particles; and optionally, based on the total quantity of primary particles and secondary particles in the graphite negative electrode active material, the quantity proportion of the secondary particles is less than or equal to 50%.

The graphite negative electrode active material having a low quantity proportion of secondary particles is beneficial to maintaining particle integrity of the graphite negative electrode active material during preparation of the battery, reducing generation of new interfaces, reducing consumption of active lithium during the cycle, and further improving cycle stability of the secondary battery. In addition, a certain quantity of secondary particles can take into account the dynamic performance of the secondary battery while reducing expansion of the negative electrode sheet, so that a battery cell has a dynamic window of a full life cycle, and lithium precipitation due to uneven current distribution does not generate to cause a sharp decline in battery capacity and a sharp deterioration in battery life, thereby comprehensively improving cycle stability of the battery.

A second aspect of the present disclosure provides a preparation method for a graphite negative electrode active material, comprising the following steps: providing a raw material; processing the raw material to obtain an intermediate product; performing graphitization treatment on the intermediate product to obtain a graphitized product; sieving the graphitized product to obtain a graphite negative electrode active material. A particle body of the graphite negative electrode active material comprises an internal region and a surface-layer region at least partially surrounding the internal region. The surface-layer region refers to a region formed by extending from a surface of the particle body of the graphite negative electrode active material to an interior of a particle by a distance of 30 nm. The mass percentage of crystalline carbon in the internal region is denoted as η1, the mass percentage of crystalline carbon in the surface-layer region is denoted as η2, and 10% ≤ η1 - η2 ≤ 35%.

In any implementation, the maximum power of the graphitization treatment is 70% to 90% of the rated power of a graphitization treatment device;

In any implementation, the temperature of the graphitization treatment is 2600°C to 3000°C.

In any implementation, the time of the graphitization treatment is 10 h to 50 h.

In any implementation, the raw material comprises one or more of petroleum coke, needle coke, and pitch coke, optionally needle coke.

In any implementation, based on the total volume of the raw material, the volume proportion of a fibrous structure in the raw material is greater than or equal to 55%, optionally 58% to 70%.

A raw material with more fibrous structures is beneficial to increasing a compacted density and a gram capacity of the graphite negative electrode active material, so that the graphite negative electrode active material retains high integrity during compaction, and the battery has good energy density while having a high cycle life. However, an excessive proportion of fibrous structures increases costs and an expansion rate of the graphite negative electrode active material, and deteriorates dynamic performance. A raw material in which the volume proportion of a fibrous structure is within the above range not only has low costs, but also enables graphite to have a good gram capacity and the battery cell to have a dynamic window of a full life cycle, thereby comprehensively improving a long-period cycle life and electrochemical performance of the battery.

In any implementation, the processing the raw material specifically comprises the following steps: crushing, shaping, and classifying the raw material to obtain a first precursor; granulating the first precursor to obtain a second precursor; carbonizing the first precursor and the second precursor at a low temperature to obtain the intermediate product.

A third aspect of the present disclosure provides a negative electrode sheet, comprising the graphite negative electrode active material in any implementation or the graphite negative electrode active material prepared by the preparation method in any implementation.

In any implementation, a negative electrode film layer has a compacted density of 1.5 g/cm³ to 1.65 g/cm³.

A fourth aspect of the present disclosure provides a secondary battery, comprising the negative electrode sheet in the third aspect of the present disclosure.

A fifth aspect of the present disclosure provides an electric device, comprising the secondary battery in the fourth aspect of the present disclosure.

### BRIEF DESCRIPTION OF THE DRAWINGS

In order to more clearly illustrate the technical solutions in the embodiments of the present disclosure, drawings required to be used in the embodiments of the present disclosure are briefly described below. It is clear that the drawings described below show only some embodiments of the present disclosure, and those skilled in the art may further derive other drawings from the drawings without creative effort.
FIG. 1 is a schematic diagram of a cross-sectional image of a particle of a graphite negative electrode active material in the present disclosure;
FIG. 2 is a schematic diagram of an embodiment of a secondary battery in the present disclosure;
FIG. 3 is a schematic exploded view of an embodiment of a secondary battery in the present disclosure;
FIG. 4 is a schematic diagram of an embodiment of a battery module in the present disclosure;
FIG. 5 is a schematic diagram of an embodiment of a battery pack in the present disclosure;
FIG. 6 is a schematic exploded view of the embodiment of the battery pack shown in FIG. 5.
FIG. 7 is a schematic diagram of an embodiment of an electric device including a secondary battery according to the present disclosure as a power supply; and
   The figures are not necessarily drawn to the actual scale. Reference Numbers: 1. Battery Pack; 2. Upper Box Body; 3. Lower Box Body; 4. Battery Module; 5. Secondary Battery; 51. Housing; 52. Electrode Assembly; 53. Cover Plate; 100. Graphite Negative Electrode Active Material; 101. Surface-layer Region; and 102. Internal Region.

### DETAILED DESCRIPTION OF PREFERRED EMBODIMENTS

Embodiments specifically disclosing a graphite negative electrode active material and a preparation method therefor, a negative electrode sheet, and a secondary battery and an electric device that contain the graphite negative electrode active material in the present disclosure will be described below in detail with appropriate reference to the accompanying drawings. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. In addition, the accompanying drawings and the following descriptions are provided for those skilled in the art to fully understand the present disclosure, and are not intended to limit the subject matter described in the claims.

The "range" disclosed in the present disclosure is limited in the form of a lower limit and an upper limit. A given range is limited by selecting a lower limit and an upper limit, which define the boundaries of the specific range. A range defined in this manner may include an end value or may not include an end value, and may be any combination, that is, any lower limit may be combined with any upper limit to form a range. For example, if the ranges of 60-120 and 80-110 are listed for a specific parameter, it is understood that the ranges of 60-110 and 80-120 are also expected. In addition, if the minimum range values of 1 and 2 are listed, and if the maximum range values of 3, 4, and 5 are listed, the following ranges may all be expected: 1-3, 1-4, 1-5, 2-3, 2-4, and 2-5. In the present disclosure, unless otherwise stated, a numerical range "a to b" represents a shorthand representation for a combination of any real numbers between a and b, where both a and b are real numbers. For example, the numerical range of "0-5" represents that all real numbers between "0-5" have been listed herein, and "0-5" is only a shortened representation of these numerical combinations. In addition, when a parameter is expressed as an integer ≥ 2, it is equivalent to disclosing that the parameter is an integer such as 2, 3, 4, 5, 6, 7, 8, 9, 10, 11, or 12.

Unless otherwise specified, all embodiments and optional embodiments of the present disclosure may be combined with each other to form new technical solutions, and it is conceivable that such technical solutions should be included in the disclosure of the present disclosure.

Unless otherwise specified, all technical solutions and optional technical solutions of the present disclosure may be combined with each other to form new technical solutions, and it is conceivable that such technical solutions should be included in the disclosure of the present disclosure.

Unless otherwise specified, all steps in the present disclosure may be performed sequentially or randomly, preferably sequentially. For example, the method includes steps (a) and (b), meaning that the method may include steps (a) and (b) performed sequentially or steps (b) and (a) performed sequentially. For example, the mentioned method may further include step (c), meaning that step (c) may be added to the method in any order, e.g. the method may include steps (a), (b) and (c), or steps (a), (c) and (b), or steps (c), (a) and (b), etc.

Unless otherwise specified, the terms "including" and "containing" mentioned in the present disclosure are meant to be open or closed. For example, the "including" and "containing" may mean that other components not listed may be further included or contained, or only the listed components may be included or contained.

In the present disclosure, the term "or" is inclusive, unless otherwise specified. For example, the phrase "A or B" means "A, B, or both A and B". More specifically, the condition "A or B" is satisfied by either A being true (or present) and B being false (or absent), A being false (or absent) and B being true (or present), or both A and B being true (or present).

Unless otherwise specified, the terms used in the present disclosure have the meanings commonly understood by those skilled in the art.

Unless otherwise specified, the numerical values of each parameter mentioned in the present disclosure may be determined by various test methods commonly used in the art, for example, the numerical values can be determined according to test methods provided in the embodiments of the present disclosure.

Unless otherwise specified, in the present disclosure, the term "active ions" refers to ions that can be intercalated and deintercalated back and forth between a positive electrode and a negative electrode of the secondary battery, including but not limited to lithium ions.

In the present disclosure, the terms "a plurality of" and "various" mean two or more.

Electrochemical performance of a carbon material is generally related to a mass content of crystalline carbon of the carbon material, and a carbon material with a high mass content of crystalline carbon generally have a high capacity, but an interlayer spacing of the crystalline carbon is small. During a long cycle, repeated intercalation and deintercalation of active ions causes a lattice to expand greatly, resulting in a high cycle expansion rate of the electrode sheet and poor cycle stability.

Based on this, the present disclosure provides a graphite negative electrode active material. A particle body of the graphite negative electrode active material includes an internal region and a surface-layer region at least partially surrounding the internal region; the surface-layer region refers to a region formed by extending from a surface of the particle body of the graphite negative electrode active material to an interior of a particle by a distance of 30 nm; and the mass percentage of crystalline carbon in the internal region is denoted as η1, the mass percentage of crystalline carbon in the surface-layer region is denoted as η2, and 10% ≤ η1 - η2 ≤ 35%.

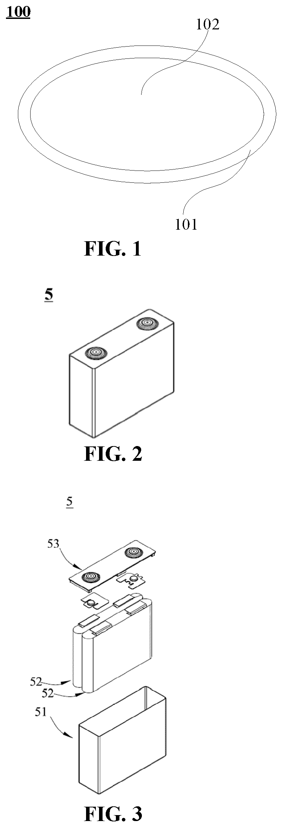

FIG. 1 is a schematic diagram of a cross-sectional image of a particle of a graphite negative electrode active material 100 in the present disclosure. As shown in FIG. 1, the region formed by extending from the surface of the particle body of the graphite negative electrode active material 100 to the interior by a distance of 30 nm is a surface-layer region 101, and the region inside the surface-layer region 101 is an internal region 102.

In the present disclosure, the mass percentage of crystalline carbon may be tested by using a method known in the art. As an example, a slice with the thickness of approximately 20 nm to 50 nm is cut from a middle portion of the particle body of the graphite negative electrode active material by using a focused ion beam (FIB), and then the slice is subjected to a transmission electron microscope (TEM) test. Through a transmission electron microscopy-electron energy loss spectroscopy (TEM-EELS) combination test, contents of different bond-type carbon elements in graphite are tested by using electron energy loss spectroscopy (EELS). By using sp² carbon as the crystalline carbon, mass percentages of crystalline carbon in different regions of the graphite negative electrode active material are determined through an integral area proportion. At least 10 points and at least 5 samples are selected in each region, and an average value of mass percentages of crystalline carbon in different regions is calculated.

In some implementations, η1 - η2 is 10%, 13%, 15%, 16%, 20%, 22%, 24%, 25%, 26%, 28%, 30%, 31%, 35%, or a value range between any two. For example, η1 - η2 may be 10% to 31%, 10% to 28%, 13% to 35%, 13% to 31%, 13% to 28%, 15% to 35%, 15% to 31%, 15% to 28%, 16% to 35%, 16% to 31%, 16% to 28%, 20% to 35%, 20% to 31%, 20% to 28%, 22% to 35%, 22% to 31%, 24% to 35%, 24% to 31%, 25% to 35%, or 25% to 31%.

The surface-layer region of the graphite negative electrode active material has a lower mass percentage of crystalline carbon than the internal region, which means that carbon atoms in a surface layer of the graphite negative electrode active material are arranged in a less regular manner, making an interaction force between molecules in the surface-layer region is more complex, thereby resulting in higher strength and hardness of the surface-layer region than the internal region of the graphite negative electrode active material. In this way, the graphite negative electrode active material retains a relatively high degree of particle integrity during cold pressing, which reduces occurrence of side reactions and is beneficial to improvement of cycle stability of a battery. In addition, during a cycle, active ions are easily intercalated and deintercalated in the surface-layer region with low crystallinity of the graphite negative electrode active material, which can reduce an expansion rate of a secondary battery during a long cycle and further improve cycle stability of the battery. The internal region of the graphite negative electrode active material has a relatively high crystallinity, which enables the material to balance a high voltage density of the battery while reducing cycle expansion and improving cycle performance, thereby implementing high capacity of the battery.

In some implementations, 75% ≤ η1 < 99%. In some implementations, 80% ≤ η1 ≤ 95%.

In some implementations, η1 is 75%, 80%, 85%, 90%, 95%, 99%, or a value range between any two.

The mass percentage of crystalline carbon in the internal region of the particle body of the graphite negative electrode active material being within the above range is beneficial to maintaining a high capacity of the graphite negative electrode active material, and the graphite negative electrode active material does not cause lattice interleaving due to excessive internal defects, so that the graphite negative electrode active material always maintains excellent electrochemical performance during a long-period cycle, thereby reducing a probability of battery performance "diving".

In some implementations, 55% ≤ η2 ≤ 75%. In some implementations, 60% ≤ η2 ≤ 70%.

In some implementations, η2 is 55%, 57%, 60%, 63%, 65%, 67%, 70%, 73%, 75%, or a value range between any two.

The mass percentage of crystalline carbon in the surface-layer region of the particle body of the graphite negative electrode active material being within the above range is beneficial to reducing physical rebound of the graphite negative electrode active material after cold pressing, and reducing an expansion rate of an electrode sheet during the cycle, thereby improving cycling stability of the secondary battery.

In some implementations, the graphite negative electrode active material has a degree of graphitization of 88% to 95%. In some implementations, the graphite negative electrode active material has a degree of graphitization of 90% to 95%.

Herein, the term "degree of graphitization" refers to an indicator that measures a degree to which carbon atoms form a close-packed hexagonal graphite crystal structure.

In the present disclosure, the degree of graphitization of the graphite negative electrode active material may be tested by using a method known in the art. As an example, high-purity silicon powder (purity ≥ 99.99%) is used as an internal standard for calibration, the graphite negative electrode active material and silicon are mixed according to a weight ratio of 5:1, and the mixture is ground evenly and compressed into tablets for sample preparation. An average interlayer spacing d002 of a crystal plane in a crystal structure (002) of the graphite negative electrode active material is obtained by using an X-ray diffractometer (such as Bruker D8 Discover) for testing and with reference to JIS K 0131-1996 and JB/T 4220-2011, and then the degree of graphitization is calculated according to the formula g = (0.344 - d002)/(0.344 - 0.3354) × 100%. In the above formula, the d002 is the average interlayer spacing of the crystal plane in the crystal structure (002) of the graphite negative electrode active material, which is expressed in nanometers (nm).

In some implementations, the degree of graphitization of the graphite negative electrode active material is 88%, 89%, 90%, 91%, 92%, 93%, 94%, 95%, or a value range between any two.

It can be understood that the degree of graphitization is an overall measure of crystallinity of the graphite negative electrode active material; and by controlling the internal region and the surface-layer region of the graphite negative electrode active material to have different mass contents of crystalline carbon, the graphite negative electrode active material has a suitable degree of graphitization to balance capacity and cycle stability of the graphite negative electrode active material.

In some implementations, the graphite negative electrode active material has a volume distribution particle size Dv50 of 7.5 µm to 14.5 µm. In some implementations, the graphite negative electrode active material has a volume distribution particle size Dv50 of 8.5 µm to 12.5 µm.

Herein, the term "volume distribution particle size Dv50" refers to a corresponding particle size when a cumulative volume distribution quantity of particles reaches 50% in a particle size distribution curve.

In the present disclosure, the volume distribution particle size Dv50 of the active material may be tested by using a method known in the art. As an example, with reference to GB/T 19077-2016, the Dv50 is determined by using a laser particle size analyzer. The testing instrument may be a Mastersizer Model 3000 laser particle size analyzer from Malvern Instruments Ltd., UK.

In some implementations, the volume distribution particle size Dv50 of the graphite negative electrode active material is 7.5 µm, 8.5 µm, 9.5 µm, 10.5 µm, 11.5 µm, 12.5 µm, 13.5 µm, 14.5 µm, or a value range between any two.

The graphite negative electrode active material having a volume distribution particle size Dv50 within the above range can provide a certain ion channel, and does not cause too many side reactions due to a too small particle size and a too large specific surface area, which can balance both dynamic performance and cycle stability.

In some implementations, the graphite negative electrode active material has a specific surface area of 1.25 m²/g to 1.95 m²/g. In some implementations, the graphite negative electrode active material has a specific surface area of 1.35 m²/g to 1.75 m²/g.

In the present disclosure, the specific surface area of the graphite negative electrode active material may be tested by using a method known in the art. As an example, with reference to GB/T 19587-2017, the specific surface area is obtained by performing a test using a specific surface area analysis and test method based on nitrogen adsorption and performing calculation using a Brunauer Emmett Teller (BET) method. A testing instrument may be a Tri-Star 3020 specific surface area pore size analysis tester from Micromeritics, USA.

In some implementations, the specific surface area of the graphite negative electrode active material is optionally 1.25m²/g, 1.35m²/g, 1.45m²/g, 1.55m²/g, 1.65m²/g, 1.75m²/g, 1.85m²/g, 1.95m²/g, or a value range between any two.

The graphite negative electrode active material has a relatively low specific surface area, so that the graphite negative electrode active material can not only leverage the advantages of a relatively low mass content of crystalline carbon in the surface-layer region to reduce battery expansion, but also reduce a probability of side reactions through the relatively low specific surface area, thereby improving cycle stability of the battery.

In some implementations, the graphite negative electrode active material has a particle size distribution (Dv90 - Dv10)/Dv50 of 1.0 to 1.6; In some implementations, the graphite negative electrode active material has a particle size distribution (Dv90 - Dv10)/Dv50 of 1.1 to 1.45.

Herein, the terms "Dv90" and "Dv10" respectively refer to corresponding particle sizes when a cumulative volume distribution quantity of particles reach 90% and 10% in a particle size distribution curve.

In the present disclosure, the volume distribution particle sizes Dv90 and Dv10 of the graphite negative electrode active material may be tested by using a method known in the art. As an example, with reference to GB/T 19077-2016, the Dv90 and the Dv10 are determined by using a laser particle size analyzer. The testing instrument may be a Mastersizer Model 3000 laser particle size analyzer from Malvern Instruments Ltd., UK.

In some implementations, the particle size distribution (Dv90 - Dv10)/Dv50 of the graphite negative electrode active material is 1.0, 1.05, 1.1, 1.15, 1.2, 1.25, 1.3, 1.35, 1.4, 1.45, 1.5, 1.55, 1.6, or a value range between any two.

Controlling the particle size distribution of the graphite negative electrode active material to be within the above range is beneficial to improving a degree of close packing of the graphite negative electrode active material and increasing a compacted density of a negative electrode film layer. In other words, a cold pressing pressure required for a negative electrode sheet to implement the same compacted density is smaller, thereby reducing a probability of cracking of the graphite negative electrode active material during cold pressing, and further improving integrity of the graphite negative electrode active material during processing; and a small stress inside particles of the graphite negative electrode active material is beneficial to maintaining a long-period pore structure of the electrode sheet during the cycle, and can maintain an original pore structure of the electrode sheet during the cycle, so that a lithium-ion intercalation path remains unobstructed, and re-filming of the graphite negative electrode active material is reduced during charging, thereby improving dynamic performance, increasing cycle life, and improving storage stability. Furthermore, the particle size distribution within the above range can further improve uniformity of lithium intercalation between particles of the graphite negative electrode active material, reduce generation of polarization, and avoid lithium precipitation caused by uneven current density, which is beneficial to implementing long-period cycle stability. In addition, the particle size distribution within the above range further helps to improve processing performance of the electrode sheet, and does not affect uniformity of slurry stirring due to too many small-sized particles in the graphite negative electrode active material, which is beneficial to improving uniformity and stability of quality of the electrode sheet and helping to implement long-period cycle stability.

In some implementations, the graphite negative electrode active material has a powder compacted density of 1.75 g/cm³ to 1.88 g/cm³ at a pressure of 49000 N. In some implementations, the graphite negative electrode active material has a powder compacted density of 1.78 g/cm³ to 1.84 g/cm³ at the pressure of 49000 N.

Herein, the term "powder compacted density" refers to the mass of powder particles per unit volume at a certain pressure.

In the present disclosure, the powder compacted density of the graphite negative electrode active material at the pressure of 49000 N may be tested by using a method known in the art. As an example, with reference to GB/T 24533-2009, 1g of graphite negative electrode active material powder is weighed and added to a mold with a bottom area of 1.327 cm². The mold is pressurized to 5000 kg (equivalent to 49000 N), the pressure is maintained for 30 s, then the mold is depressurized, which is maintained for 10 s, and the powder compacted density of the graphite negative electrode active material at the pressure of 49000 N is determined by using an electronic pressure testing machine (such as the UTM7305 electronic pressure testing machine).

In some implementations, the powder compacted density of the graphite negative electrode active material at a pressure of 49000 N is optionally 1.75 g/cm³, 1.78 g/cm³, 1.82 g/cm³, 1.84 g/cm³, 1.85 g/cm³, 1.88 g/cm³, or any value range between any two.

For the graphite negative electrode active material having a powder compacted density within the above range, it is easy to maintain high particle integrity during cold pressing, which helps to the increase of cycle life of the secondary battery.

In some implementations, the graphite negative electrode active material has a tap density of 1.05 g/cm³ to 1.30 g/cm³.

Herein, the term "tap density" refers to a mass per unit volume of powder tapped under specified conditions in a container.

In the present disclosure, the tap density of the graphite negative electrode active material may be tested by using a method known in the art. As an example, with reference to GB/T 5162-2006, the tap density is determined by using a powder tap density tester. The testing instrument may be a Dandong Bettersize BT-301, and testing parameters are as follows: vibration frequency of 250 ± 15 times/min, amplitude of 3 ± 0.2 mm, vibration times of 5000 times, and a measuring cylinder of 25 mL.

In some implementations, the tap density of the graphite negative electrode active material is 1.05 g/cm³, 1.10 g/cm³, 1.15 g/cm³, 1.20 g/cm³, 1.25 g/cm³, 1.30 g/cm³, or any value range between any two.

In some implementations, the graphite negative electrode active material has a gram capacity of 345 mAh/g to 355 mAh/g. In some implementations, the gram capacity of the graphite negative electrode active material is 347 mAh/g to 353 mAh/g.

Herein, the term "gram capacity" refers to the ratio of the amount of electrical capacity that an active material can release to the mass of the active material.

In the present disclosure, the gram capacity of the graphite negative electrode active material may be tested by using a method known in the art. As an example, a graphite negative electrode active material sample, a conductive agent carbon black, and polyvinylidene fluoride (PVDF) are fully stirred and mixed in an appropriate amount of solvent NMP at a mass ratio of 91.6:1.8:6.6 to form a uniform negative electrode slurry; the negative electrode slurry is evenly coated on a surface of a negative electrode current collector copper foil and dried and cold-pressed; and then an electrolyte solution is injected with a metal lithium sheet as a counter electrode and a polypropylene (PP) film as a separator, where a formulation of the electrolyte solution used is as follows: dimethyl carbonate (DMC), ethyl methyl carbonate (EMC), and ethylene carbonate (EC) are mixed at a weight ratio of 1:1:1 to obtain an organic solvent, and then LiPF₆ is dissolved in the organic solvent to prepare an electrolyte solution with a concentration of 1.0 mol/L. A CR2430 button cell battery is assembled in an argon-protected glove box. At 25°C, the button cell battery prepared above is first discharged at a constant current of 0.05 C to 0.005 V, then discharged at a constant current of 10 µA to 0.005 V and left to stand for 5 min, and a first-cycle discharge capacity of the button cell battery is recorded; and then the button cell battery is charged at a constant current of 0.1 C to 2.0 V, and a charge capacity of the button cell battery is recorded. The ratio of the charge capacity of the button cell battery to the mass of the graphite negative electrode active material sample is the gram capacity of the graphite negative electrode active material.

In some implementations, the gram capacity of the graphite negative electrode active material is 345 mAh/g, 346 mAh/g, 347 mAh/g, 348 mAh/g, 349 mAh/g, 350 mAh/g, 351 mAh/g, 352 mAh/g, 353 mAh/g, 354 mAh/g, 355 mAh/g, or a value range between any two.

During charging and discharging, the graphite negative electrode active material having a gram capacity within the above range neither causes significant lattice expansion due to a too high degree of graphitization of the graphite negative electrode active material nor causes difficulty in compaction due to a too low degree of graphitization of the graphite negative electrode active material. In order to implement the same electrode sheet compacted density, a higher cold pressing pressure is required, thereby causing cracking during cold pressing, generating a new interface during the cycle to consume too much active lithium, and comprehensively improving the cycle life of the secondary battery.

In some implementations, the graphite negative electrode active material has a I_{D}/I_{G} of 0.05 to 0.10, where the I_{D}/I_{G} is the ratio of a D peak intensity to a G peak intensity obtained by a Raman spectrum, I_{D} represents the D peak intensity of the Raman spectrum at 1350 ± 100 cm⁻¹, and I_{G} represents the G peak intensity of the Raman spectrum at 1580 ± 100 cm⁻¹.

In the present disclosure, the I_{D}/I_{G} of the graphite negative electrode active material can be tested by using any known mode of Raman spectroscopy. As an example, with reference to GB/T 40219-2021, an InVia Qontor (Reflex) Raman spectrometer is used for testing, where a solid laser with a wavelength of 523 nm is used as a light source, 100 points are collected in a 100 µm × 100 µm region, and a median of the I_{D}/I_{G} is taken, where the median is a value in a middle position of the collected I_{D}/I_{G} data arranged in ascending order.

In some implementations, the I_{D}/I_{G} of the graphite negative electrode active material is 0.05, 0.06, 0.07, 0.08, 0.09, 0.10, or a value range between any two.

Different from an active material in which amorphous carbon is post-coated on the surface of the graphite particle body, the graphite negative electrode active material provided by the embodiments of the present disclosure has a relatively low degree of surface disorder while having amorphous carbon on the surface. The amorphous carbon in the active material in which amorphous carbon is post-coated on the surface of the graphite particle body is generally derived from the coated organic resin, which generates the amorphous carbon under low-temperature carbonization, and thus the amorphous carbon in a coating layer has a high degree of surface disorder. Whereas, the surface-layer region and the internal region of the graphite negative electrode active material provided by the embodiments of the present disclosure are both derived from the same precursor and undergo the same heat treatment procedure, and thus the amorphous carbon of the graphite negative electrode active material is uniformly distributed in the surface-layer region of the graphite negative electrode active material, so that the surface-layer region of the graphite negative electrode active material has a low degree of surface disorder while having a low content of crystalline carbon. This enables the graphite negative electrode active material to leverage the advantages of amorphous carbon to improve dynamic performance of the battery and reduce a cycle expansion rate of the electrode sheet, and does not cause too many side reactions and a large decrease in capacity of the battery due to a too high degree of disorder of a surface layer of the graphite negative electrode active material, which can comprehensively improve cycle stability of the battery.

In some implementations, an interlayer spacing of the surface-layer region of the graphite negative electrode active material is denoted as d1, an interlayer spacing of the internal region of the graphite negative electrode active material is denoted as d2, and the graphite negative electrode active material satisfies d1 > d2. In some implementations, 0.3365 nm ≤ d1 ≤ 0.3378 nm. In some implementations, 0.3358 nm ≤ d2 ≤ 0.3364 nm.

Herein, the term "interlayer spacing" refers to the shortest distance between two adjacent carbon atoms in the same carbon layer in graphite.

In the present disclosure, interlayer spacings of different regions of the graphite negative electrode active material may be tested by using an instrument and a method that are known in the art. As an example, a high resolution transmission electron microscope (HRTEM) may be used for testing. The testing instrument may be a Spectra S/TEM scanning transmission electron microscope from Thermo Fisher.

In some implementations, the interlayer spacing d1 of the surface-layer region of the graphite negative electrode active material is optionally 0.3365 nm, 0.3367 nm, 0.3369 nm, 0.3371 nm, 0.3372 nm, 0.3373 nm, 0.3375 nm, 0.3378 nm, or a value range between any two. In some implementations, the interlayer spacing d2 of the internal region of the graphite negative electrode active material is optionally 0.3358 nm, 0.3359 nm, 0.3361 nm, 0.3363 nm, 0.3364 nm, or a value range between any two.

The interlayer spacing of the surface-layer region is greater than the interlayer spacing of the internal region of the graphite negative electrode active material, which can play a role of a lithium intercalation buffer layer, improve wettability of the electrolyte solution to the graphite negative electrode active material, and improve fast charging performance of the battery.

In some implementations, the graphite negative electrode active material includes both primary particles and secondary particles. In some implementations, based on the total quantity of primary particles and secondary particles in the graphite negative electrode active material, the quantity proportion of the secondary particles is less than or equal to 50%.

Herein, the term "primary particles" refers to particles in a non-agglomerated state.

Herein, the term "secondary particles" refer to particles in an agglomerated state formed by aggregation of two or more primary particles.

The primary particles and the secondary particles can be distinguished by observing cross sections of particles of the graphite negative electrode active material by using a scanning electron microscope (SEM). In the present disclosure, the quantity proportion of the secondary particles in the graphite negative electrode active material may be tested by using a method known in the art. As an example, a cross section of a negative electrode sheet may be prepared by using a cross-section polisher (such as an IB-09010 CP argon ion cross-section polisher from JEOL Corporation of Japan); and then with reference to JY/T010-1996, a scanning electron microscope (such as a Sigma 300 scanning electron microscope from ZEISS Corporation of Germany) is used to scan the cross section of the negative electrode sheet. A plurality of test regions are randomly selected from the test sample, images of the plurality of test regions are obtained by using the scanning electron microscope, the ratio of a quantity of graphite negative electrode active material particles with secondary particle morphology in each image to the total quantity of the graphite negative electrode active material particles is calculated, and an average value of a plurality of statistical results is the quantity proportion of the secondary particles in the graphite negative electrode active material.

In some implementations, based on the total quantity of primary particles and secondary particles in the graphite negative electrode active material, the quantity proportion of the secondary particles is optionally 50%, 40%, 30%, 20%, 10%, or any value range between any two.

The graphite negative electrode active material having a low quantity proportion of secondary particles is beneficial to maintaining particle integrity of the graphite negative electrode active material during preparation of the battery, reducing generation of new interfaces, reducing consumption of active lithium during the cycle, and further improving cycle stability of the secondary battery. In addition, a certain quantity of secondary particles can take into account the dynamic performance of the secondary battery while reducing expansion of the negative electrode sheet, so that a battery cell has a dynamic window of a full life cycle, and lithium precipitation due to uneven current distribution does not generate to cause a sharp decline in battery capacity and a sharp deterioration in battery life, thereby comprehensively improving cycle stability of the battery.

A second aspect of the present disclosure provides a preparation method for a graphite negative electrode active material, including the following steps: providing a raw material; processing the raw material to obtain an intermediate product; performing graphitization treatment on the intermediate product to obtain a graphitized product; sieving the graphitized product to obtain a graphite negative electrode active material. A particle body of the graphite negative electrode active material includes an internal region and a surface-layer region at least partially surrounding the internal region. The surface-layer region refers to a region formed by extending from a surface of the particle body of the graphite negative electrode active material to an interior of a particle by a distance of 30 nm. The mass percentage of crystalline carbon in the internal region is denoted as η1, the mass percentage of crystalline carbon in the surface-layer region is denoted as η2, and 10% ≤ η1 - η2 ≤ 35%.

Herein, the term "graphitization treatment" refers to a heat treatment procedure of a carbon material, in which the carbon material transforms from a two-dimensional carbon network structure into a three-dimensional ordered structure through growth of "microcrystals" under the action of a high temperature.

In some implementations, the maximum power of the graphitization treatment is 70% to 90% of the rated power of a graphitization treatment device;

In some implementations, the power of the graphitization treatment is optionally 70%, 75%, 80%, 85%, 90% of the rated power of the device, or any value range between any two.

It can be understood that the graphitization treatment device refers to any apparatus capable of performing graphitization treatment, including but not limited to apparatuses such as an Acheson furnace, a box furnace, an internal-stringing furnace, a continuous graphitization furnace, an electric calcination furnace, a medium frequency furnace, and a tube furnace. Graphitization treatment devices produced by different manufacturers may have different rated powers, and may be selected based on actual conditions.

Graphitization treatment power used in the present disclosure needs to be lower than the rated power of the graphitization treatment device to implement uniformity of a temperature field during graphitization treatment. Ensuring consistency of the gram capacity of the material is beneficial to improving the cycle life of the battery.

In some implementations, the graphitization treatment device is an internal-stringing furnace, and the internal-stringing furnace has the rated power of 25000 W to 32000 W.

In some implementations, the graphitization treatment device is an Acheson furnace, and the Acheson furnace has the rated power of 28000 W to 30000 W.

In some implementations, the temperature of the graphitization treatment is 2600°C to 3000°C.

In some implementations, the temperature of the graphitization treatment is 2600°C, 2700°C, 2800°C, 2900°C, 3000°C, or any value range between any two.

In some implementations, the time of the graphitization treatment is 10 h to 50 h.

In some implementations, the time of the graphitization treatment is 10 h, 15 h, 20 h, 25 h, 30 h, 35 h, 40 h, 45 h, 50 h, or any value range between any two.

In some implementations, the graphitization treatment device is an internal-stringing furnace, and the graphitization treatment has a duration of 10 h to 30 h at the maximum power.

In some implementations, the graphitization treatment device is an Acheson furnace, and the graphitization treatment has a duration of 30 h to 50 h at the maximum power.

In some implementations, the raw material includes at least one of petroleum coke, needle coke, or pitch coke. In some implementations, the raw material is needle coke.

Herein, the term "petroleum coke" refers to coke formed by high-temperature carbonization of petroleum residual oil or petroleum pitch.

Herein, the term "needle coke" refers to coal tar pitch or petroleum pitch, which is carbonized in a liquid phase to form an anisotropic mesophase, and then subjected to processes such as high-temperature carbonization to form coke with a needle-like texture.

Herein, the term "pitch coke" refers to a solid material formed by carbonizing coal tar pitch at a high temperature.

In some implementations, the volume proportion of a fibrous structure in the raw material is greater than or equal to 55%. In some implementations, the volume proportion of the fibrous structure in the raw material is 58% to 70%.

Herein, the "fibrous structure", also referred to as streamline structure, refers to a structure of the raw material with obvious fibrous texture observed under a microscope.

Generally, microstructures of coke charge can be classified into a mosaic structure, a regional structure, and a fibrous structure based on morphological features and a size of an isochromatic region of coke charge under a polarizing microscope. Generally, an isochromatic region microstructure with a size of less than 30 µm is determined as a mosaic structure, an isochromatic region microstructure with a size of greater than 30 µm is determined as a regional structure, and an anisotropic banded isochromatic region is determined as a fibrous structure.

In the present disclosure, the volume proportion of the fibrous structure in the raw material may be tested by using a method known in the art. As an example, raw materials are taken in accordance with regulations of GB 1997-89, the raw materials crushed to 1 mm are mixed evenly, 40g to 50g are separated, 4 g to 5 g of 0. 07 mm to 1.0 mm sample is taken by using a square hole sieve for slide preparation; powder-coke and block-coke light sheets are prepared in accordance with regulations of MT 116.1-86, a diameter of the powder-coke light sheet shall not be less than 22 mm, and a volume occupied by cement shall be less than 1/3; and the sample is placed on a slide with cement, flattened, and then placed on a stage for focusing, and a polarizer and an analyzer are adjusted to make the polarizer and the analyzer orthogonal after calibrating the microscope. An azurite inspection plate (1λ) is inserted to make a visual field present an interference color of first-order red, and a step size of a moving ruler is determined to ensure that more than 400 effective measuring points are evenly distributed, where a point spacing is preferably 0.3 mm to 0.5 mm, and a row spacing is preferably 0.5 mm to 0.8 mm. Starting from one end of the sample, a microstructure category under the intersection of crosshairs is determined, and a quantity of effective measurement points of an optical tissue of the fibrous structure divided by the total quantity of statistical testing points is used as a volume content of the fibrous structure in the raw material.

In some implementations, based on the total volume of the structure of the raw material, the volume proportion of a fibrous structure in the raw material is optionally 55%, 58%, 60%, 63%, 65%, 68%, 70%, or any value range between any two.

A raw material with more fibrous structures is beneficial to increasing a compacted density and a gram capacity of the graphite negative electrode active material, so that the graphite negative electrode active material retains high integrity during compaction, and the battery has good energy density while having a high cycle life. However, an excessive proportion of fibrous structures increases costs and an expansion rate of the graphite negative electrode active material, and deteriorates dynamic performance. A raw material in which the volume proportion of a fibrous structure is within the above range not only has low costs, but also enables graphite to have a good gram capacity and the battery cell to have a dynamic window of a full life cycle, thereby comprehensively improving a long-period cycle life and electrochemical performance of the battery.

In some implementations, the maximum gram capacity that can be implemented by the raw material is greater than the gram capacity of the graphite negative electrode active material.

The use of a high-grade raw material and the control of the degree of graphitization make the maximum gram capacity that can be implemented by the raw material not fully exerted, so that the mass percentage of crystalline carbon in the surface-layer region of the graphite negative electrode active material is lower than the mass percentage of crystalline carbon in the internal region of the graphite negative electrode active material, so as to reduce cycle expansion of the graphite negative electrode active material and improve cycle stability of the graphite negative electrode active material.

In some implementations, the processing the raw material specifically includes: crushing, shaping, and classifying the raw material to obtain a first precursor; granulating the first precursor to obtain a second precursor; and carbonizing the first precursor and the second precursor at a low temperature to obtain the intermediate product.

Crushing is a procedure of reducing the particle size of the raw material, and the raw material can be crushed by using any mechanical apparatus such as a crusher or a mechanical mill.

Shaping and classification is a procedure of adjusting a particle size distribution of the raw material to obtain the first precursor meeting particle size requirements. The particle size and the particle size distribution of the first precursor can be controlled by adjusting a classification frequency and an air inlet volume. In some implementations, during classification, the classification frequency is 40 Hz to 50 Hz, and an opening degree of a damper is 20% to 70%.

It can be understood that the carbonizing the first precursor and the second precursor at a low temperature to obtain the intermediate product includes not only carbonizing a mixture of the first precursor and the second precursor at a low temperature to obtain an intermediate product, but also carbonizing the first precursor and the second precursor at a low temperature to obtain a first intermediate product and a second intermediate product, respectively.

In some implementations, the first precursor has a Dv50 particle size of 6.0 µm to 10.0 µm.

In some implementations, the first precursor has a Dv50 particle size of 6.0 µm, 7.0 µm, 8.0 µm, 9.0 µm, 10.0 µm, or a value range between any two.

In some implementations, the first precursor has a particle size distribution (Dv90 - Dv10)/Dv50 of 1.05 to 1.75.

In some implementations, the particle size distribution (Dv90 - Dv10)/Dv50 of the first precursor is 1.05, 1.15, 1.25, 1.35, 1.45, 1.55, 1.65, 1.75, or a value range between any two.

In some implementations, the first precursor has a tap density of 0.5 g/cm³ to 0.7 g/cm³.

In some implementations, the first precursor has a tap density of 0.5 g/cm³, 0.55 g/cm³, 0.6 g/cm³, 0.65 g/cm³, 0.7 g/cm³, or any value range between any two.

In some implementations, the second precursor has a Dv50 particle size of 11.0 µm to 15.0 µm.

In some implementations, the second precursor has a Dv50 particle size of 11.0 µm, 12.0 µm, 13.0 µm, 14.0 µm, 15.0 µm, or a value range between any two.

The second precursor is obtained by granulating the first precursor, and thus the second precursor mainly forms secondary particles in the graphite negative electrode active material.

Controlling particle sizes of the first precursor and the second precursor helps to control the particle size and the particle size distribution of the graphite negative electrode active material, and improve cycle stability of the battery.

In some implementations, the temperature of low-temperature carbonization is 900°C to 1300°C, and the time of low-temperature carbonization is 24 h to 240 h.

In some implementations, the temperature of low-temperature carbonization is optionally 900°C, 1000°C, 1100°C, 1200°C, 1300°C, or a value range between any two.

In some implementations, the time of low-temperature carbonization is optionally 24 h, 50 h, 75 h, 100 h, 150 h, 200 h, 240 h, or a value range between any two.

### [Negative electrode sheet]

In some embodiments, the negative electrode sheet includes a negative electrode current collector and a negative electrode film layer disposed on at least one surface of the negative electrode current collector. For example, the negative electrode current collector has two surfaces opposite in its thickness direction, and the negative electrode film layer is disposed on either one or both of the two opposite surfaces of the negative electrode current collector.

In some embodiments, the negative electrode film layer includes the graphite negative electrode active material in the first aspect of the implementations of the present disclosure or the graphite negative electrode active material prepared by using the method in the second aspect of the implementations of the present disclosure, so that the secondary battery has high first coulombic efficiency, high energy density, and good cycle performance

In some embodiments, the negative electrode film layer has a compacted density of 1.5 g/cm³ to 1.65 g/cm³.

Herein, the compacted density of the negative electrode film layer may be tested by using a method known in the art. As an example, an electronic balance is used to weigh a test sample of the negative electrode sheet with an area of S, the weight is denoted as W1, and the thickness T1 of the negative electrode sheet is measured by using a micrometer. Then, the weighed electrode sheet film layer is wiped off, the weight of the negative electrode current collector is weighed and denoted as W2, and the thickness T2 of the negative electrode current collector is measured by using a micrometer. Then, the compacted density of the negative electrode film layer is PD = (W1 - W2)/[(T1 - T2) × S].

In some embodiments, the negative electrode film layer has a compacted density of 1.5 g/cm³, 1.55 g/cm³, 1.6 g/cm³, 1.65 g/cm³, or any value range between any two.

In some embodiments, the negative electrode film layer may further include other negative electrode active materials in addition to the above-mentioned graphite negative electrode active material. In some embodiments, the other negative electrode active materials may include, but are not limited to, one or a plurality of conventional natural graphite, other artificial graphite, soft carbon, hard carbon, a silicon-based material, a tin-based material, or lithium titanate. The silicon-based material may include one or a plurality of elemental silicon, silicon oxide, a silicon-carbon composite, a silicon-nitrogen composite, or a silicon alloy material. The tin-based material may include one or a plurality of elemental tin, tin oxide, or a tin alloy material.

In some embodiments, the negative electrode film layer optionally further includes a negative electrode conductive agent. The type of the negative electrode conductive agent is not particularly limited in the present disclosure. As an example, the negative electrode conductive agent may include one or a plurality of superconducting carbon, conductive graphite, acetylene black, carbon black, ketjen black, carbon dot, carbon nanotube, graphene, or carbon nanofiber.

In some embodiments, the negative electrode film layer optionally further includes a negative electrode binder. The type of the negative electrode binder is not particularly limited in the present disclosure. As an example, the negative electrode binder may include one or a plurality of styrene-butadiene rubber (SBR), aqueous unsaturated resin SR-1B, aqueous acrylic resin (for example, polyacrylic acid (PAA), polymethacrylic acid (PMAA), and sodium polyacrylate (PAAS)), polyacrylamide (PAM), polyvinyl alcohol (PVA), sodium alginate (SA), or carboxymethyl chitosan (CMCS).

In some embodiments, the negative electrode film layer optionally further includes other auxiliary agents. As an example, other auxiliary agents may include a thickening agent, such as carboxymethylcellulose (CMC) sodium and a PTC thermistor material.

In some embodiments, the negative electrode current collector may be metal foil or a composite current collector. As an example of the metal foil, a copper foil may be used. The composite current collector may include a polymer material base layer and a metal material layer formed on at least one surface of the polymer material base layer. As an example, the metal material may include one or a plurality of copper, a copper alloy, nickel, a nickel alloy, titanium, a titanium alloy, silver, or a silver alloy. As an example, the polymer material base layer may include one or a plurality of polypropylene (PP), polyethylene terephthalate (PET), polybutylene terephthalate (PBT), polystyrene (PS), or polyethylene (PE).

The negative electrode film layer is generally formed by applying negative electrode slurry onto the negative electrode current collector, followed by drying and cold pressing. The negative electrode slurry is generally formed by dispersing a negative electrode active material, an optional conductive agent, an optional binder, and other optional auxiliary agents in a solvent and stirring them uniformly. The solvent may be N-methylpyrrolidone (NMP) or de-ionized water, but is not limited thereto.

The negative electrode sheet does not exclude other additional functional layers in addition to the negative electrode film layer. For example, in some embodiments, the negative electrode sheet described in the present disclosure further includes a conductive undercoating layer (for example, including a conductive agent and a binder) sandwiched between the negative electrode current collector and the negative electrode film layer and disposed on the surface of the negative electrode current collector. In some embodiments, the negative electrode sheet described in the present disclosure further includes a protective layer covering a surface of the negative electrode film layer.

### [Positive electrode sheet]

In some embodiments, the positive electrode sheet includes a positive electrode current collector and a positive electrode film layer disposed on at least one surface of the positive electrode current collector. For example, the positive electrode current collector has two surfaces opposite in its own thickness direction, and the positive electrode film layer is disposed on either one or both of the two opposite surfaces of the positive electrode current collector.

The positive electrode current collector may be a metal foil or a composite current collector. As an example of the metal foil, aluminum foil may be used. The composite current collector may include a polymer material base layer and a metal material layer formed on at least one surface of the polymer material base layer. As an example, the metal material may include one or a plurality of aluminum, an aluminum alloy, nickel, a nickel alloy, titanium, a titanium alloy, silver, or a silver alloy. As an example, the polymer material base layer may include one or a plurality of polypropylene (PP), polyethylene terephthalate (PET), polybutylene terephthalate (PBT), polystyrene (PS), or polyethylene (PE).

The positive electrode film layer generally includes a positive electrode active material, an optional binder and an optional conductive agent. The positive electrode film layer is generally formed by applying a positive electrode paste on the positive electrode current collector, followed by drying and cold pressing. The positive electrode slurry is generally formed by dispersing a positive electrode active material, an optional conductive agent, an optional binder, and any other component in a solvent and stirring them uniformly. The solvent may be N-methylpyrrolidone (NMP), but is not limited thereto. As an example, the binder used for the positive electrode film layer may include one or a plurality of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or fluorine-containing acrylate resin. As an example, the conductive agent used for the positive electrode film layer includes one or a plurality of superconducting carbon, conductive graphite, acetylene black, carbon black, ketjen black, carbon dot, carbon nanotube, graphene, or carbon nanofiber.

The positive electrode active material may be a positive electrode active material used for a secondary battery well-known in the art.

When the secondary battery in the present disclosure is a lithium-ion battery, the positive electrode active material may include, but is not limited to, one or a plurality of lithium transition metal oxide, lithium-containing phosphate, or respective modified compounds thereof. Examples of the lithium transition metal oxide may include, but are not limited to, one or a plurality of a lithium cobalt oxide, a lithium nickel oxide, a lithium manganese oxide, a lithium nickel cobalt oxide, a lithium manganese cobalt oxide, a lithium nickel manganese oxide, a lithium nickel cobalt manganese oxide, a lithium nickel cobalt aluminum oxide, or respective modified compounds thereof. Examples of the lithium-containing phosphate may include, but are not limited to, one or a plurality of lithium iron phosphate, a composite material of lithium iron phosphate and carbon, lithium manganese phosphate, a composite material of lithium manganese phosphate and carbon, lithium ferric manganese phosphate, a composite material of lithium ferric manganese phosphate and carbon, or respective modified compounds thereof.

In some embodiments, to further increase the energy density of the secondary battery, the positive electrode active material for a lithium-ion battery may include one or a plurality of lithium transition metal oxide having a general formula of LiₐNi_{b}Co_{c}M_{d}OₑA_{f} or a modified compound thereof. 0.8 ≤ a ≤1.2, 0.5≤ b < 1, 0 < c < 1, 0 < d < 1, 1 ≤ e ≤ 2, and 0 ≤ f ≤ 1, where M is selected from one or a plurality of Mn, Al, Zr, Zn, Cu, Cr, Mg, Fe, V, Ti, or B, and A is selected from one or a plurality of N, F, S, or Cl.

In some embodiments, as an example, the positive electrode active material used for a lithium ion battery may include one or a plurality of LiCoO₂, LiNiO₂, LiMnO₂, LiMn₂O₄, LiNi_{1/3}Co_{1/3}Mn_{1/3}O₂ (NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.85}Co_{0.15}Al_{0.05}O₂, LiFePO₄, or LiMnPO₄.

The modified compound of each of the aforementioned positive electrode active materials may be a compound of the positive electrode active material subjected to doping modification and/or surface coating modification.

### [Electrolyte]

In some embodiments, the electrolyte is an electrolyte solution including an electrolyte salt and a solvent.

The type of the electrolyte salt is not specifically limited and may be selected according to an actual demand.

When the secondary battery in the present disclosure is a lithium-ion battery, as an example, the electrolyte salt may include one or a plurality of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluorobis(oxalato)phosphate (LiDFOP), or lithium tetrafluoro(oxalato)phosphate (LiTFOP).

The type of the solvent is not specifically limited and may be selected according to an actual demand. In some embodiments, as an example, the solvent may include one or a plurality of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), or ethyl sulfonyl ethane (ESE).

In some embodiments, the electrolyte solution optionally further includes an additive. For example, the additive may include a negative electrode film-forming additive or a positive electrode film-forming additive, and may further include an additive capable of improving some performance of a secondary battery, for example, an additive for improving overcharge performance of a secondary battery, an additive for improving high-temperature performance of a secondary battery, an additive for improving low-temperature power performance of a secondary battery, etc.

### [Separator]

The type of the separator is not particularly limited in the present disclosure, and any well-known porous separator with good chemical stability and mechanical stability may be used.

In some embodiments, a material of the separator may include one or a plurality of glass fiber, non-woven fabric, polyethylene, polypropylene, or polyvinylidene fluoride. The separator may be a single-layer film or a multilayer composite film. When the separator is a multilayer composite thin film, materials of all the layers are the same or different.

In some embodiments, the positive electrode sheet, the separator, and the negative electrode sheet may be fabricated into an electrode assembly by a winding process or a lamination process.

### Secondary battery

A fourth aspect of the implementations of the present dislcoure provides a secondary battery.

The type of the secondary battery is not particularly limited in the present disclosure, for example, the secondary battery may be a lithium-ion battery. Under normal conditions, the secondary battery includes a positive electrode sheet, a negative electrode sheet, an electrolyte, and the like. During charging and discharging of the secondary battery, active ions are intercalated and deintercalated back and forth between the positive electrode sheet and the negative electrode sheet. The electrolyte functions to conduct the active ions between the positive electrode sheet and the negative electrode sheet. The type of the electrolyte is not particularly limited in the present disclosure, and may be selected according to an actual demand. For example, the electrolyte may be selected from at least one of a solid electrolyte or a liquid electrolyte (namely, an electrolyte solution). In secondary batteries using the electrolyte solution and some secondary batteries using the solid electrolyte, a separator may be further included. The separator is disposed between the positive electrode sheet and the negative electrode sheet to function to isolate.

In some embodiments, the secondary battery may include an outer package. The outer package may be used to package the foregoing electrode assembly and electrolyte.

In some embodiments, the outer package may be a hard shell, such as a hard plastic shell, an aluminum shell, a steel shell, etc. The outer package may also be a pouch, such as a bag-type pouch. The material of the pouch may be plastic, such as one or more of polypropylene (PP), polybutylene terephthalate (PBT), and polybutylene succinate (PBS).

The shape of the secondary battery is not limited in the present disclosure, and may be a cylindrical shape, a square shape, or any other shape. FIG. 2 illustrates a square secondary battery 5 as an example.

In some embodiments, as shown in FIG. 3, the outer package may include a housing 51 and a cover plate 53. The housing 51 may include a bottom plate and side plates connected to the bottom plate, the bottom plate and the side plates forming an accommodating chamber in an enclosing manner. The housing 51 has an opening communicating with the accommodating chamber, and the cover plate 53 is configured to cover the opening to close the accommodating chamber. The positive electrode sheet, the negative electrode sheet, and the separator may be formed into an electrode assembly 52 through a winding process or a lamination process. The electrode assembly 52 is packaged within the accommodating chamber. The electrolyte solution is impregnated into the electrode assembly 52. There may be one or a plurality of the electrode assemblies 52 contained in the secondary battery 5, and adjustments may be made according to requirements.

A method for manufacturing the secondary battery of the present disclosure is well known. In some embodiments, the positive electrode sheet, the separator, the negative electrode sheet, and the electrolyte solution may be assembled to form the secondary battery. As an example, the positive electrode sheet, the separator, and the negative electrode sheet may be formed into an electrode assembly through a winding process or a lamination process. The electrode assembly may be placed into the outer package, dried, then be injected with an electrolyte solution, and be subject to procedures such as vacuum sealing, resting, formation, and shaping to obtain a secondary battery.

In some embodiments of the present disclosure, the secondary battery according to the present disclosure may be assembled into a battery module. The battery module may contain a plurality of secondary batteries. The specific quantity may be adjusted according to the application and capacity of the battery module.

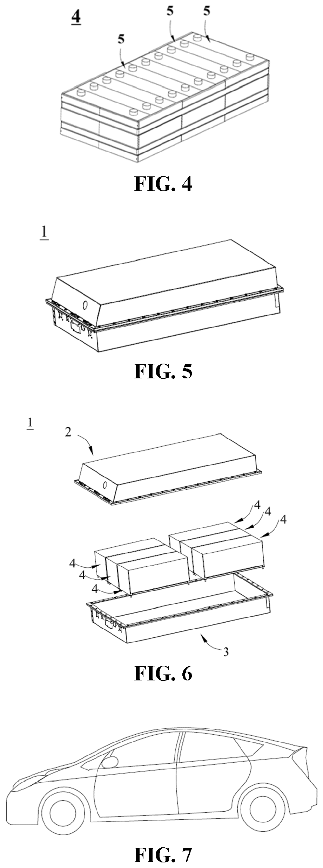

FIG. 4 is a schematic diagram of a battery module 4 as an example. As shown in FIG. 4, in the battery module 4, a plurality of secondary batteries 5 may be arranged sequentially in the length direction of the battery module 4. Certainly, the battery cells may alternatively be arranged in any other manner. Further, the plurality of secondary batteries 5 may be fixed by fasteners.

Optionally, the battery module 4 may further include a housing with an accommodating space. The plurality of secondary batteries 5 are accommodated in the accommodating space.

In some embodiments, the battery modules described above may be assembled into a battery pack, and the number of battery modules included in the battery pack may be adjusted according to the application and capacity of the battery pack.

FIG. 5 and FIG. 6 are schematic diagrams of a battery pack 1 as an example. As shown in FIG. 5 and FIG. 6, the battery pack 1 may include a battery case and a plurality of battery modules 4 provided in the battery case. The battery case includes an upper box body 2 and a lower box body 3. The upper box body 2 is configured to cover the lower box body 3 to form a closed space for accommodating the battery modules 4. The plurality of battery modules 4 may be arranged in any manner in the battery case.

### Electric device

The present disclosure further provides an electric device including at least one of a secondary battery, a battery module, or a battery pack provided by the present disclosure. The secondary battery, the battery module, or the battery pack may be used as a power supply of the electric device and may also be used as an energy storage unit of the electric device. The electric device may include, but is not limited to, mobile equipment (e.g., a cell phone, a tablet computer, or a notebook computer), an electric vehicle (e.g., a battery electric vehicle, a hybrid electric vehicle, a plug-in hybrid electric vehicle, an electric bicycle, an electric scooter, an electric golf cart, or an electric truck), an electric train, ship, or satellite, or an energy storage system.

For the electric device, the secondary battery, the battery module, or the battery pack may be selected according to a use demand.

FIG. 7 is a schematic diagram of an electric device as an example. The electrical device is a pure electric vehicle, a hybrid electric vehicle, a plug-in hybrid electric vehicle, or the like. To satisfy the demands for high power and high energy density of the electric device, a battery pack or a battery module may be used.

As another example, the electric device may be a cell phone, a tablet computer, a notebook computer, or the like. This electric device is generally required to be thin and lightweight, and may use a secondary battery as a power supply.

### Examples

The following examples describe the disclosure of the present disclosure more specifically. These examples are used only for illustration, since various modifications and changes made within the scope of the disclosure of the present disclosure are obvious to those skilled in the art. Unless otherwise stated, all parts, percentages and ratios reported in the following example are on a mass basis. All reagents used in the examples are commercially available or can be synthesized according to conventional methods, and used directly without further processing. The instruments used in the example are commercially available.

### Example 1

### (1) Preparation of a graphite negative electrode active material

Needle coke in which a fibrous structure had a proportion of 60.8% was crushed, and the crushed material was shaped to remove fine powder to obtain a first precursor. The first precursor had a Dv50 particle size of 9.1 µm and a particle size distribution (Dv90 - Dv10)/Dv50 of 1.35, and the first precursor had a tap density of 0.67 g/cm³.

A portion of the first precursor was granulated and reformed in a pot to obtain a second precursor with a particle size Dv50 of 14.4 µm;

The ungranulated first precursor and the second precursor were respectively placed into a furnace for carbonization in which a carbonization temperature was 1150°C, and a carbonization time was 24 h, to obtain a first intermediate product and a second intermediate product.

The first intermediate product and the second intermediate product were respectively placed into an internal-stringing furnace and subjected to graphitization treatment at the temperature of 2800°C, in which the internal-stringing furnace had the rated power of 28000 W, the maximum power of the graphitization treatment was 22400 W, the maximum power was 80% of the rated power of the device, and a duration of maintaining the maximum power was 25 h, to obtain primary particles and secondary particles respectively.

The primary particles and the secondary particles were mixed evenly at a mass ratio of 1:1, and the mixture was sieved to remove magnetism to obtain a graphite negative electrode active material.

The mass percentage η1 of crystalline carbon in an internal region of the graphite negative electrode active material was 87%, the mass percentage η2 of crystalline carbon of a surface-layer region was 65%, η1 - η2 = 22%, a degree of graphitization was 92.97%, a specific surface area was 1.49 m²/g, a volume distribution particle size Dv50 was 10.5 µm, a powder compacted density at a pressure of 49000 N was 1.78 g/cm³, a gram capacity was 350.2 mAh/g, I_{D}/I_{G} was 0.08, an interlayer spacing d1 of the surface-layer region was 0.3373 nm, an interlayer spacing d2 of the internal region was 0.3360 nm, and a particle size distribution (Dv90 - Dv10)/Dv50 was 1.36.

### (2) Preparation of a negative electrode sheet

The graphite negative electrode active material prepared above, a conductive agent Super P, a thickener sodium carboxymethyl cellulose CMC-Na, and a binder styrene-butadiene rubber SBR were mixed at a dry material mass ratio of 96:1:1.2:1.8, a solvent deionized water was added, and the mixture was stirred under the action of a vacuum mixer until the system was uniform to obtain a negative electrode slurry; and the negative electrode slurry was evenly coated on a negative electrode current collector copper foil, and a negative electrode sheet was obtained after drying, cold pressing, and slitting. A negative electrode film layer had a compacted density of 1.60 g/cm³ and a surface density of 9.48 mg/cm².

### (3) Preparation of a positive electrode sheet

A positive electrode active material lithium iron phosphate (LFP), the conductive agent Super P, and a binder polyvinylidene fluoride (PVDF) were mixed at a mass ratio of 97:1:2, a solvent N-methylpyrrolidone (NMP) was added, and the mixture was stirred under the action of the vacuum mixer until the system was uniform to obtain a positive electrode slurry; and the positive electrode slurry was evenly coated on a positive electrode current collector aluminum foil, and a positive electrode sheet was obtained after drying, cold pressing, and slitting. A positive electrode film layer had a compacted density of 2.50 g/cm³ and a surface density of 19.48 mg/cm².

### (4) Preparation of an electrolyte solution

In an argon atmosphere glove box with a water content of less than 10 ppm, diethyl carbonate (DEC), ethyl methyl carbonate (EMC), and ethylene carbonate (EC) were mixed at a weight ratio of 1:1:1 to obtain an organic solvent, then LiPF₆ was dissolved in the organic solvent to prepare an electrolyte solution with a concentration of 1.0 mol/L, and afterwards vinylene carbonate (VC) was added, and a content of the VC was 2% of the total mass of the electrolyte solution.

### (5) Preparation of a separator

A polyethylene film was used as a separator.

### (6) Preparation of a lithium-ion battery

The positive electrode sheet, the separator, and the negative electrode sheet described above were stacked in order such that the separator was located between the positive electrode sheet and the negative electrode sheet to provide a separation function, and then the three items were wound to obtain an electrode assembly; and the electrode assembly was placed into an outer package, dried, then injected with an electrolyte solution, and subjected to procedures such as vacuum sealing, resting, formation, and shaping to obtain a lithium-ion battery.

### Examples 2-8

The preparation method was substantially the same as that in Example 1, except that the structure of the raw material or the preparation process was adjusted, and thus crystallinity of the internal region and/or the surface-layer region of the graphite negative electrode active material was adjusted, and specific preparation parameters were shown in Table 1.

**Table 1**

| No. | Process conditions | | |
|---|---|---|---|
| | Volume proportion of fibrous structure of raw material | Maximum power/rated power | Constant power processing time/h |
| Example 1 | 60.8% | 80.00% | 25 |
| Example 2 | 60.8% | 90.00% | 25 |
| Example 3 | 57.8% | 80.00% | 18 |
| Example 4 | 57.8% | 80.00% | 28 |
| Example 5 | 67.2% | 90.00% | 20 |
| Example 6 | 67.2% | 90.00% | 30 |
| Example 7 | 60.8% | 80.00% | 28 |
| Example 8 | 60.8% | 80.00% | 30 |

### Comparative Example 1

The preparation method in Comparative Example 1 was substantially the same as that in Example 1, except that the maximum power of the graphitization treatment was 28000 W (the rated power of the device) and constant power duration at the maximum power was 35 h, and the surface-layer region of body particles of the prepared graphite negative electrode active material has no disordered layer.

### Comparative Example 2

The preparation method was substantially the same as that in Comparative Example 1, except that a surface of the graphite negative electrode active material prepared in Comparative Example 1 was subjected to carbon coating treatment. Specifically, the material prepared in Comparative Example 1 was mixed with a coating agent (pitch) at a ratio of 100%:3%, and the mixed product was subjected to carbonization treatment at a carbonization temperature of 1100°C for 2 h of constant temperature heat treatment. After the material was cooled to room temperature, the material was sieved and demagnetized to obtain a finished material.

### Performance tests:

### (1) Test of cold pressing rebound rate of negative electrode sheet

The thickness of the negative electrode sheet after cold pressing was L0, and after the cold-pressed negative electrode sheet was placed in an environment of 25°C and 10% humidity for 24 h, the thickness of the negative electrode sheet was tested to be L1. A cold pressing rebound rate V0 of the negative electrode sheet was calculated by the following formula: V0 = (L1 - L0)/L0.

### (2) Test of cycle expansion rate of negative electrode sheet

The thickness of the negative electrode sheet after cold pressing in each of the examples and comparative examples was tested and denoted as L0. The secondary battery prepared in the examples and comparative examples was subjected to a charge and discharge test in an environment of 25°C, and was discharged at a constant current to 2.5 V at a discharge current of 1.0 C (that is, a current value of a theoretical capacity that was entirely discharged within 1 h). Then, the battery was charged to 3.65 V at a constant current of 1.0 C, and continued to be charged at a constant voltage until the current reached 0.05 C, and after the fully charged battery cell was allowed to stand for 5 min, the battery was discharged to 2.5 V at a constant current of 1.0 C, and a discharge capacity at this time was denoted as C0. The secondary battery was charged to 3.65 V at 25°C, and the secondary battery was disassembled and the thickness of the negative electrode sheet at this time was tested and denoted as L2. A cycle expansion rate of the negative electrode sheet is (L2 - L0)/L0 × 100%.

### (3) Cycle stability test

At 60°C, the battery in each of the examples and comparative examples was charged with a constant current of 1 C to a voltage of 3.65 V, then charged with a constant voltage of 3.65 V to a current of less than or equal to 0.05 C, and afterwards discharged with a constant current of 1 C to a voltage of 2.5 V. This was one charge and discharge procedure, and a discharge capacity C1 of a first cycle was recorded. The charge and discharge cycle was repeated until the battery capacity was reduced to 80% of an initial capacity C1, the test was stopped, and a quantity of cycles was recorded.

### Test results

It can be seen from Table 2 that the graphite negative electrode active material in which a difference in the mass percentage of crystalline carbon between the internal region and the surface-layer region is 10%-35% can implement improvement in cycle performance of the battery.

**Table 2**

| No. | Material performance | | | Battery Performance | |
|---|---|---|---|---|---|
| | η1 | η2 | η1 - η2 | Cycle expansion rate | Number of cycles/cycle |
| Example 1 | 87% | 65% | 22% | 28.80% | 2117 |
| Example 2 | 95% | 64% | 31% | 30.20% | 1890 |
| Comparative Example 1 | 99% | 87% | 9% | 32.10% | 1727 |
| Comparative Example 2 | 99% | 52% | 44% | 31.10% | 1680 |

It can be seen from Table 3 that when 80% ≤ η1 < 95%, the battery can have both good gram capacity and long cycle life.

**Table 3**

| No. | Material performance | | | Battery Performance | | |
|---|---|---|---|---|---|---|
| | η1 | η2 | η1 - η2 | Gram capacity mAh/g | Cycle expansion rate | Number of cycles/cycle |
| Example 1 | 87% | 65% | 22% | 350 | 28.80% | 2117 |
| Example 2 | 95% | 64% | 31% | 354 | 30.20% | 1890 |
| Example 3 | 76% | 63% | 13% | 345 | 29.70% | 1980 |
| Example 4 | 81% | 65% | 16% | 350 | 28.00% | 2060 |
| Example 5 | 91% | 65% | 26% | 353 | 29.50% | 1920 |
| Example 6 | 99% | 75% | 24% | 355 | 29.80% | 1820 |

It can be seen from Table 4 that when 60% ≤ η2 ≤ 70%, the battery has a low cold pressing rebound rate, a low cycle expansion rate, and an excellent cycle life.

**Table 4**

| No. | Material performance | | | Battery Performance | | |
|---|---|---|---|---|---|---|
| | η1 | η2 | η1 - η2 | Cold pressing rebound rate | Cycle expansion rate | Number of cycles/cycle |
| Example 1 | 87% | 65% | 22% | 5.90% | 28.80% | 2117 |
| Example 7 | 88% | 68% | 20% | 4.40% | 28.30% | 1990 |
| Example 8 | 88% | 72% | 16% | 4.00% | 27.90% | 1890 |

It should be noted that the present disclosure is not limited to the aforementioned embodiments. The aforementioned embodiments are merely examples, and any embodiment having substantially the same configuration as the technical concept and exhibiting the same operation and effect within the scope of the claims of the present disclosure is included in the technical scope of the present disclosure. In addition, various modifications that can be conceived by those skilled in the art may be made to the embodiments without departing from the subject matter of the present disclosure, and other embodiments constructed by combining some of the constituent elements in the embodiments are also included in the scope of the present disclosure.

## Claims

1. A graphite negative electrode active material, **characterized in that** a particle body of the graphite negative electrode active material comprises an internal region and a surface-layer region at least partially surrounding the internal region; the surface-layer region refers to a region formed by extending from a surface of the particle body of the graphite negative electrode active material to an interior of a particle by a distance of 30 nm; and the mass percentage of crystalline carbon in the internal region is denoted as η1, the mass percentage of crystalline carbon in the surface-layer region is denoted as η2, and 10% ≤ η1 - η2 ≤ 35%.

2. The graphite negative electrode active material according to claim 1, wherein
75% ≤ η1 ≤ 99%, optionally 80% ≤ η1 ≤ 95%.

3. The graphite negative electrode active material according to claim 1 or 2, wherein
55% ≤ η2 ≤ 75%, optionally 60% ≤ η2 ≤ 70%.

4. The graphite negative electrode active material according to any one of claims 1 to 3, wherein the graphite negative electrode active material has a degree of graphitization of 88% to 95%, optionally 90% to 95%.

5. The graphite negative electrode active material according to any one of claims 1 to 4, wherein the graphite negative electrode active material has a volume distribution particle size Dv50 of 7.5 µm to 14.5 µm, optionally 8.5 µm to 12.5 µm.

6. The graphite negative electrode active material according to any one of claims 1 to 5, wherein the graphite negative electrode active material satisfies at least one of the following:
(1) the graphite negative electrode active material has a specific surface area of 1.25 m²/g to 1.95 m²/g, optionally 1.35 m²/g to 1.75 m²/g;
(2) the graphite negative electrode active material has a particle size distribution (Dv90 - Dv10)/Dv50 of 1.0 to 1.6, optionally 1.1 to 1.5;
(3) the graphite negative electrode active material has a powder compacted density of 1.75 g/cm³ to 1.88 g/cm³, optionally 1.78 g/cm³ to 1.84 g/cm³, at a pressure of 49000 N;
(4) the graphite negative electrode active material has a tap density of 1.05 g/cm³ to 1.30 g/cm³;
(5) the graphite negative electrode active material has a gram capacity of 345 mAh/g to 355 mAh/g, optionally 347 mAh/g to 353 mAh/g;
(6) the graphite negative electrode active material has a I_{D}/I_{G} of 0.05 to 0.10, wherein the I_{D}/I_{G} is the ratio of a D peak intensity to a G peak intensity obtained by a Raman spectrum, I_{D} represents the D peak intensity of the Raman spectrum at 1350 ± 100 cm⁻¹, and I_{G} represents the G peak intensity of the Raman spectrum at 1580 ± 100 cm⁻¹;
(7) an interlayer spacing of the surface-layer region of the graphite negative electrode active material is denoted as d1, an interlayer spacing of the internal region of the graphite negative electrode active material is denoted as d2, and the graphite negative electrode active material satisfies d1 > d2, optionally 0.3365 nm ≤ d1 ≤ 0.3378 nm, and optionally 0.3358 nm ≤ d2 ≤ 0.3364 nm; and
(8) the graphite negative electrode active material comprises both primary particles and secondary particles; and optionally, based on the total quantity of primary particles and secondary particles in the graphite negative electrode active material, the quantity proportion of the secondary particles is less than or equal to 50%.

7. A preparation method for a graphite negative electrode active material, comprising the following steps:
providing a raw material;
processing the raw material to obtain an intermediate product;
performing graphitization treatment on the intermediate product to obtain a graphitized product;
sieving the graphitized product to obtain a graphite negative electrode active material, wherein
a particle body of the graphite negative electrode active material comprises an internal region and a surface-layer region at least partially surrounding the internal region; the surface-layer region refers to a region formed by extending from a surface of the particle body of the graphite negative electrode active material to an interior of a particle by a distance of 30 nm; and the mass percentage of crystalline carbon in the internal region is denoted as η1, the mass percentage of crystalline carbon in the surface-layer region is denoted as η2, and 10% ≤ η1 - η2 ≤ 35%.

8. The preparation method according to claim 7, wherein the graphitization treatment satisfies at least one of the following conditions:
(1) the maximum power of the graphitization treatment is 70% to 90% of the rated power of a graphitization treatment device;
(2) the temperature of the graphitization treatment is 2600°C to 3000°C; and
(3) the time of the graphitization treatment is 10 h to 50 h.

9. The preparation method according to claim 7 or 8, wherein
the raw material comprises one or a plurality of petroleum coke, needle coke, or pitch coke, optionally needle coke.

10. The preparation method according to claim 9, wherein
based on the total volume of the raw material, the volume proportion of a fibrous structure in the raw material is greater than or equal to 55%, optionally 58% to 70%.

11. The preparation method according to any one of claims 7 to 10, wherein the processing the raw material specifically comprises the following steps:
crushing, shaping, and classifying the raw material to obtain a first precursor;
granulating the precursor to obtain a second precursor;
carbonizing the first precursor and the second precursor at a low temperature to obtain the intermediate product.

12. A negative electrode sheet, **characterized by** comprising the graphite negative electrode active material according to any one of claims 1 to 6 or the graphite negative electrode active material prepared by using the preparation method according to any one of claims 7 to 11.

13. The negative electrode sheet according to claim 12, wherein a negative electrode film layer has a compacted density of 1.5 g/cm³ to 1.65 g/cm³.

14. A secondary battery, **characterized by** comprising the negative electrode sheet according to claim 12 or 13.

15. An electric device, **characterized by** comprising the secondary battery according to claim 14.
